# EUROPEAN PATENT APPLICATION

(11) **EP 2 485 017 A1**
(43) Date of publication of application: **08.08.2012**
(21) Application number: 10820159.1
(22) Date of filing: 30.09.2010
(51) Int. Cl.: G01F 1/66

(54) **ULTRASONIC FLOWMETER**

(30) Priority: 01.10.2009 JP 2009229443
(71) Applicant: Panasonic Corporation, Kadoma-shi Osaka 571-8501 (JP)
(72) Inventor: NAKABAYASHI, Yuji, Osaka 540-6207 (JP); FUJII, Yuji, Osaka 540-6207 (JP); SATOU, Masato, Osaka 540-6207 (JP)
(74) Representative: Schwabe - Sandmair - Marx
(86) International application number: PCT/JP2010/005900
(87) International publication number: WO 2011/040038

(57) **Abstract**

The present invention implements an ultrasonic flow meter device which does not require a complicated configuration such as a hermetic seal, in an inexpensive and easy manner. A typical ultrasonic flow meter device (10) includes a fluid passage body (1), a measurement fluid passage (2) placed within the fluid passage body (1), a pair of ultrasonic sensors (3), a wall (6) defining the measurement fluid passage (2) and attached with the ultrasonic sensors (3), a propagation time measuring means (4) for measuring a propagation time of an ultrasonic sound wave propagating between the ultrasonic sensors (3), and a fluid flow calculating means (5) for calculating a fluid flow based on a propagation time, and a seal member (7) is provided between the fluid passage body and the wall (6) to prevent a fluid from leaking.

## Description

### Technical Field

The present invention relates to an ultrasonic flow meter device for measuring a flow (flow rate) of gas used at home by using an ultrasonic sound wave.

### Background Art

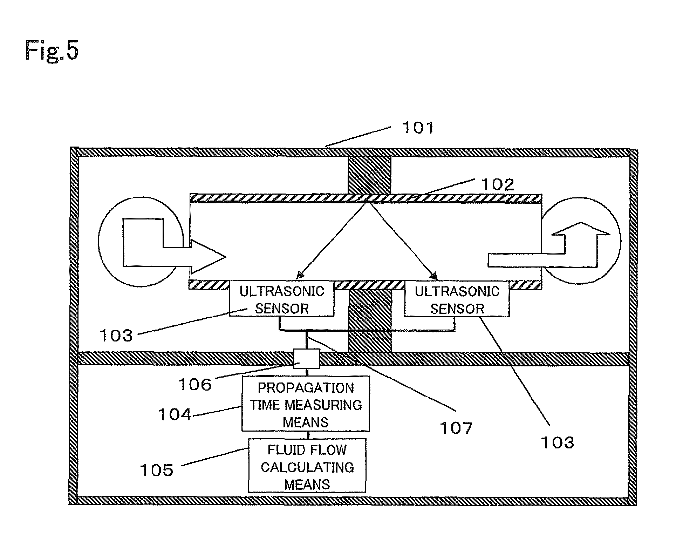

As shown in Fig. 5, a conventional ultrasonic flow meter device comprises a casing 101, a fluid passage 102, a pair of ultrasonic sensors 103 attached to the fluid passage 102, a propagation time measuring means 104 for measuring a propagation time of an ultrasonic sound wave propagating between the pair of ultrasonic sensors 103, and a fluid flow calculating means 105 for calculating a fluid flow based on the propagation time. The casing 101 accommodates the fluid passage 102. The interior of casing 101 in which a fluid which is a measurement target flows is isolated from outside the casing 101, thereby inhibiting gas which is the measurement target from leaking to outside the flow meter device.

### Citation Lists

### Patent Literature

Patent Literature 1: Japanese Laid-Open Patent Application Publication No. 2005-172658

### Summary of the Invention

### Technical Problem

However, in the conventional ultrasonic flow meter device, since the interior of the casing 101 is isolated from outside the casing 101, signal lines 107 of the ultrasonic sensors 103 are required to be drawn into the interior of the casing 101 in a hermetically sealed state. Because of this, a complicated configuration such as a hermetic seal 106 is used. This results in high manufacturing cost and a complicated manufacturing process.

There is also known a configuration in which a fluid inlet of a casing is connected to a fluid outlet of the casing by means of a pipe-shaped fluid passage to prevent fluid from leaking to outside. Since components increase in number in this configuration, sealed portions of coupling portions increase correspondingly. This also results in high manufacturing cost and a complicated manufacturing process.

There is also known a configuration in which ultrasonic sensors are attached to a casing. Once the ultrasonic sensors are attached to the casing, they cannot be detached from the casing. Because of this, such a flow meter device cannot be handled easily as compared to another configuration.

The present invention is directed to solving the problem associated with the prior art, and an object of the present invention is to provide an ultrasonic flow meter device which eliminates a need for a complicated configuration such as a hermetic seal and can be implemented inexpensively and easily.

### Solution to Problem

To solve the problem associated with the prior art, an ultrasonic flow meter device of the present invention comprises a fluid passage having an inlet and an outlet of a fluid which is a measurement target; a fluid passage body having an opening formed between the inlet and the outlet of the fluid passage; a measurement fluid passage inserted into the fluid passage through the opening and communicating the inlet and the outlet with each other; a wall placed on a side surface of the measurement fluid passage and covering the opening; and a measuring unit including a pair of ultrasonic sensors attached to the wall and configured to transmit an ultrasonic signal; and a fluid flow calculating means for measuring a propagation time of the ultrasonic signal propagating between the ultrasonic sensors and calculating a fluid flow; wherein the wall and an outer peripheral portion of the opening are joined together in a sealed state.

In accordance with this configuration, the measuring unit including the ultrasonic sensors is inserted into the opening of the fluid passage body. Therefore, by joining the opening of the fluid passage body to the wall of the measuring unit in a sealed state, the fluid which is a measurement target can be prevented from leaking.

The above and further objects, features and advantages of the present invention will more fully be apparent from the following detailed description of preferred embodiments with accompanying drawings.

### Advantageous Effects of the Invention

As described above, the present invention achieves an advantage that it is possible to provide an ultrasonic flow meter device which eliminates a need for a complicated configuration such as a hermetic seal and can be implemented inexpensively and easily.

### Brief Description of the Drawings

[Fig. 1] Fig. 1 is a schematic cross-sectional view showing an exemplary configuration of an ultrasonic flow meter device according to Embodiment 1 of the present invention.
[Fig. 2] Fig. 2 is a perspective view showing an exemplary external configuration of the ultrasonic flow meter device of Fig. 1.
[Fig. 3] Fig. 3A is a schematic cross-sectional view showing an exemplary configuration of major components taken in the direction of an arrow A of Fig. 2, in the flow meter device of Fig. 2. Fig. 3B is a schematic cross-sectional view showing an exemplary configuration of major components taken in the direction of an arrow B of Fig. 2, in the flow meter device of Fig. 2, and corresponding to the cross-sectional view of the ultrasonic flow meter device of Fig. 3A, which is taken in the direction of arrows along C-C of Fig. 3A.
[Fig. 4] Fig. 4A is a schematic cross-sectional view showing an exemplary configuration of an ultrasonic flow meter device according to Embodiment 2 of the present invention. Fig. 4B is a cross-sectional view of the ultrasonic flow meter device of Fig. 4A, which is taken in the direction of arrows along D-D of Fig. 4A.
[Fig. 5] Fig. 5 is a schematic cross-sectional view showing an exemplary configuration of a conventional ultrasonic flow meter device.

### Reference Signs Lists

- 1: fluid passage body
- 1a: inlet
- 1b: outlet
- 1c: opening
- 2: measurement fluid passage
- 2a: dividing member
- 3: ultrasonic sensor
- 5: fluid flow calculating means
- 6: wall
- 8: fluid passage
- 10, 16: ultrasonic flow meter device
- 11: measuring unit
- 15: buffer section

### Description the Embodiments

According to the present invention, an ultrasonic flow meter device comprises a fluid passage having an inlet and an outlet of a fluid which is a measurement target; a fluid passage body having an opening formed between the inlet and the outlet of the fluid passage; a measurement fluid passage inserted into the fluid passage through the opening and communicating the inlet and the outlet with each other; a wall placed on a side surface of the measurement fluid passage and covering the opening; and a measuring unit including a pair of ultrasonic sensors attached to the wall and configured to transmit an ultrasonic signal; and a fluid flow calculating means for measuring a propagation time of the ultrasonic signal propagating between the ultrasonic sensors and calculating a fluid flow; wherein the wall and an outer peripheral portion of the opening are joined together in a sealed state. In this configuration, the measuring unit including the ultrasonic sensors is inserted into the opening of the fluid passage body. Therefore, the opening of the fluid passage body and the wall of the measuring unit can be joined together in a sealed state. Since the fluid which is a measurement target is prevented from leaking, the fluid flowing in the fluid passage can be prevented from leaking to outside the fluid passage body.

Since the ultrasonic sensors are attached to the fluid passage body as the measuring unit, they can be detached from the fluid passage body and maintenance of them can be easily performed. Therefore, the ultrasonic flow meter device which is easy to handle can be implemented.

In the flow meter device having the above configuration, the measurement fluid passage has a rectangular fluid passage cross-section. This can stabilize a flow velocity and improve measurement accuracy. Because of the rectangular fluid passage cross-section, the wall constituting a part of the measurement fluid passage can be formed as the flat plate and can be sealed by a simple method.

In the ultrasonic flow meter device having the above configuration, the pair of ultrasonic sensors may be placed on the same surface of the wall such that the ultrasonic signal transmitted from one of the ultrasonic sensors is reflected at least once by an inner wall of the fluid passage which is opposite to the ultrasonic sensor and received by the other of the ultrasonic sensors. Since the ultrasonic sensors are placed on one side of the fluid passage body, the opening of the fluid passage and the wall of the measurement fluid passage can be joined together in a sealed state.

In the ultrasonic flow meter device having the above configuration, the fluid passage may have a U-shaped, and a buffer section having a greater cross-sectional area than the measurement fluid passage may be provided between the inlet and the measurement fluid passage. In this configuration, since the fluid which is a measurement target flowing into the ultrasonic flow meter device through the inlet is reduced in flow velocity, by the buffer section, and then is introduced into the measurement fluid passage, the flow of the gas can be smoothly bent at a substantially right angle.

In the ultrasonic flow meter device having the above configuration, the measurement fluid passage may be divided into a plurality of passages extending in a fluid flow direction by a plate-shaped dividing member placed in parallel with a radiation direction of the ultrasonic signal transmitted from the ultrasonic sensor. By a fairing action of the dividing member, measurement is carried out under a state in which the fluid is flowing stably. This can improve measurement accuracy.

In the ultrasonic flow meter device having the above configuration, the dividing member may be placed in parallel with a direction in which the fluid which is a measurement target flows into the ultrasonic flow meter device through the inlet of the fluid passage. Since the fluid which is a measurement target inflowing through the inlet is introduced into the fluid passages defined by the dividing member substantially evenly, the fluid flows in the fluid passages at a uniform flow velocity. This can improve measurement accuracy.

In the ultrasonic flow meter device having the above configuration, the measurement fluid passage may have a smaller cross-section than the fluid passage, and a separating section may be provided in a space between the measurement fluid passage and the fluid passage.

Hereinafter, embodiments of the present invention will be described with reference to the drawings. The embodiments below are in no way intended to limit the present invention.

### (Embodiment 1)

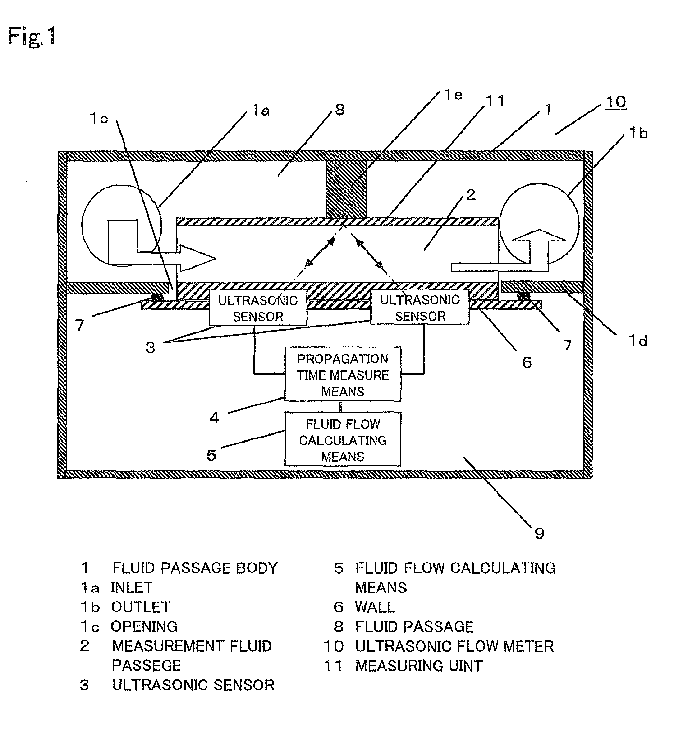

Hereinafter, Embodiment 1 of the present embodiment will be described with reference to Figs. 1 to 3. As shown in Fig. 1, an ultrasonic flow meter device 10 (flow measuring device) of the present embodiment includes a measuring unit 11 mounted to an opening 1c provided on a fluid passage body 1, etc..

The fluid passage body 1 is a part of a pipe (conduit) through which a fluid which is a measurement target, i.e., a fluid whose flow is to be measured, flows. In the interior of the fluid passage body 1, a fluid passage 8 is formed. The fluid passage body 1 has an opening 1c on a side wall thereof. The ultrasonic flow meter device 10 is mountable to the opening 1c.

The ultrasonic flow meter device 10 includes the fluid passage body 1 and a circuit chamber 9 accommodating a control circuit and the like, which are defined by a partition wall 1d. The fluid passage body 1 has an inlet 1a and an outlet 1b of the fluid which is a measurement target. In addition, the fluid passage body 1 has a separating section 1e for separating the inlet 1a side and the outlet 1b side from each other in a state where the measuring unit 11 described later is inserted into the fluid passage body 1.

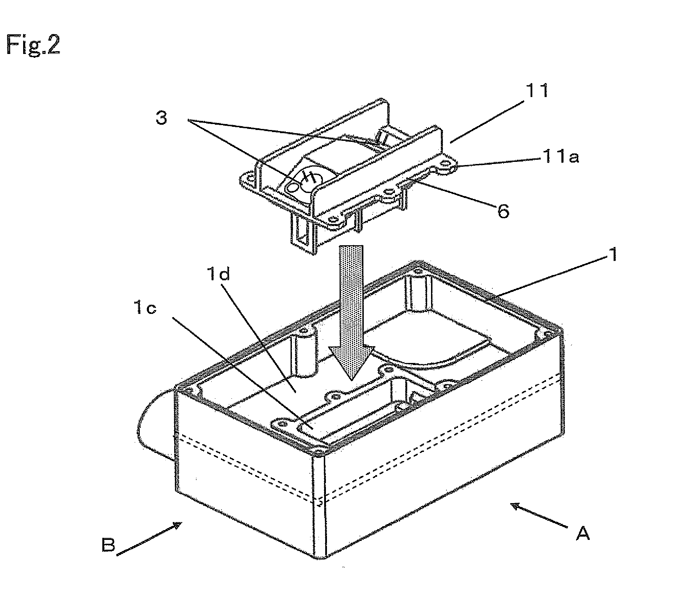

The partition wall 1d is provided with the opening 1c into which the measuring unit 11 is inserted. As shown in Fig. 2, the measurement fluid passage 2 of the measuring unit 11 is inserted into the opening 1c. In this state, as shown in Fig. 1, the inlet 1a and the outlet 1b of the fluid passage body 1 are separated from each other by the separating section 1e except for the measurement fluid passage 2 and communicate with each other only via the measurement fluid passage 2.

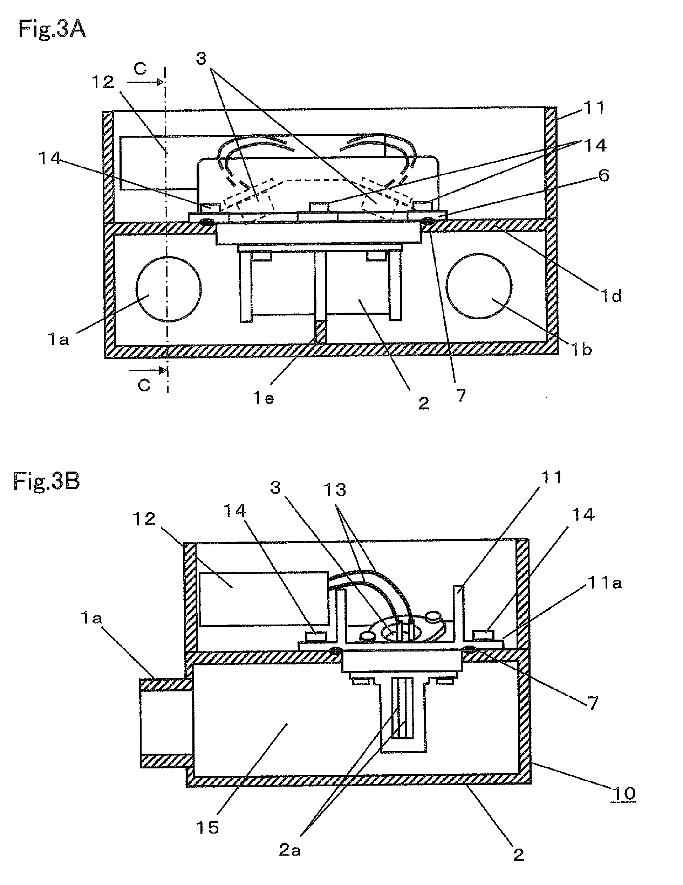

As shown in Fig. 2, the measuring unit 11 is provided with flanges 11 a for allowing the measuring unit 11 to be fastened to the fluid passage body 1 by screws. As shown in Figs. 3A and 3B, the measuring unit 11 is fastened to the fluid passage body 1 by screws 14 in a state where a seal member 7 is provided between the wall 6 and the partition wall 1d. This allows the opening 1 c to be sealed in a state where the measuring unit 11 is inserted into the opening 1c. Therefore, it is possible to prevent the fluid which is a measurement target from leaking from the fluid passage body 1 into the circuit chamber 9. For easier explanation, in Figs. 3A and 3B, the opening 1c is not assigned with a reference symbol.

The measuring unit 11 includes the measurement fluid passage 2 through which the fluid which is a measurement target flows, the wall 6 provided on the side surface of the measurement fluid passage 2, and a pair of ultrasonic sensors 3 placed on the wall 6 with a predetermined angle. The measurement fluid passage 2 is positioned inside the fluid passage body 1 (i.e., inside the fluid passage 8) in a state where the measuring unit 11 is mounted to the opening 1c. The measurement fluid passage 2 is provided with the wall 6 on the side surface thereof. The wall 6 has a shape in which the wall 6 is positioned outside of the opening 1c and covers the opening 1c, in a state where the measurement fluid passage 2 is positioned within the opening 1c.

The measuring unit 11 includes the pair of ultrasonic sensors 3. One of the pair of ultrasonic sensors 3 is positioned at a downstream side in a flow direction (block arrow in the drawing) of the fluid which is a measurement target in the measurement fluid passage 2, while the other of the pair of ultrasonic sensors 3 is positioned at an upstream side in the flow direction. The pair of ultrasonic sensors 3 are placed on the same surface of the measurement fluid passage 2 such that the ultrasonic sound wave transmitted from one of the pair of ultrasonic sensors 3 is reflected once by the inner wall of the measurement fluid passage 2, and received by the other of the pair of ultrasonic sensors 3.

The configuration of the measurement fluid passage 2, the ultrasonic sensors 3, the wall 6, and the like, constituting the measuring unit 11 is not particularly limited, but a known fluid pipe, known ultrasonic transducers, and a known plate member may be suitably used.

The pair of ultrasonic sensors 3 are connected to a propagation time measuring means 4, which is connected to a fluid flow calculating means 5. The propagation time measuring means 4 measures a time (propagation time) which passes from when an ultrasonic signal transmitted from one of the pair of ultrasonic sensors 3 is reflected by the inner wall and received by the other of the pair of ultrasonic sensors 3. The fluid flow calculating means 5 calculates a fluid flow of the fluid which is a measurement target, based on the measured propagation time. The propagation time measuring means 4 and the fluid flow calculating means 5 are accommodated in the circuit chamber 9.

The specific configuration of the propagation time measuring means 4 and the fluid flow calculating means 5 is not particularly limited. The propagation time measuring means 4 may be a known circuit which is capable of measuring the propagation time of the ultrasonic sound wave transmitted and received between the ultrasonic sensors 3, while the fluid flow calculating means 5 may be a known circuit which is capable of calculating the fluid flow based on the propagation time measured by the propagation time measuring means 4. In the present embodiment, as shown in Figs, 3A and 3B, the propagation time measuring means 4 and the fluid flow calculating means 5 are integrated as a single control circuit 12. For example, a circuit which is the propagation time measuring means 4 and a circuit which is the fluid flow calculating means 5 may be mounted onto a single board to construct a circuit board.

In a further alternative, the propagation time measuring means 4 and the fluid flow calculating means 5 may be functional blocks of a controller. To be specific, for example, a CPU is built into the control circuit 12 as a controller. The propagation time measuring means 4 and the fluid flow calculating means 5 may be implemented in such a manner that the CPU operates according to programs stored in a memory unit such as a memory (not shown). Since the propagation time measuring means 4 and the fluid flow calculating means 5 constitute a circuit unit or a functional unit in the ultrasonic flow meter device 10 in this way, the propagation time measuring means 4 may be read as a propagation means meter or a propagation means measuring unit, and the fluid flow calculating means 5 may be read as a fluid flow calculator or a fluid flow calculating unit, in the present embodiment.

In the present embodiment, the ultrasonic sensors 3 are connected to the control circuit 12 (to be precise, propagation time measuring means 4) by lead lines as shown in Fig. 3B, but the present invention is not limited to this. The ultrasonic sensors 3 may be directly coupled to the board or the like into which the control circuit 12 is incorporated, by a configuration such as the lead pins, or by another know configuration.

In the present embodiment, as shown in Figs. 1, and Figs. 3A and 3B, the wall 6 of the measuring unit 11 is configured to cover the opening 1c, and the wall 6 and the outer peripheral portion of the opening 1c are joined together in a sealed state. To be specific, a seal member 7 is provided between the partition wall 1d and the wall 6. As the seal member 7, a known simple member may be suitably used. Therefore, the fluid which is a measurement target can be easily prevented from leaking without the use of a member such as a hermetic seal.

In the present embodiment, since the measurement fluid passage 2 has a fluid passage with a rectangular cross-section, the wall 6 can be formed of a flat plate. This allows the wall 6 to be joined to the partition wall 1d which is the outer peripheral portion of the opening 1c in a substantially close contact state. Because of this, the opening 1c can be sealed by a simple method. Furthermore, in the present embodiment, "V path" is used, in which the ultrasonic sound wave is reflected once by the inner wall of the measurement fluid passage 2. Because of this, the ultrasonic sensors 3 can be placed on the same surface. Therefore, the opening 1c can be sealed with a simpler configuration as compared to a configuration in which the ultrasonic sensors 3 are placed to face each other so as to sandwich the fluid passage.

In the present embodiment, in the fluid passage body 1, the fluid passage extending from the inlet 1a to the outlet 1b has a U-shaped. As shown in Fig. 3B, between the inlet 1a and the measurement fluid passage 2, a buffer section 15 is provided. In this configuration, the fluid which is a measurement target flowing into the ultrasonic flow meter device 10 through the inlet 1a is reduced in flow velocity by the buffer section 15, and then is introduced into the measurement fluid passage 2. Therefore, the flow of the fluid which is a measurement target can be bent smoothly at a substantially right angle.

As shown in Fig. 3B, at least part of of an internal fluid passage of the measurement fluid passage 2 is divided into plural passages by dividing members 2a. The dividing members 2a are placed in parallel with a radiation direction (transmission direction) of the ultrasonic signal transmitted from the ultrasonic sensor 3. By placing the dividing members 2a in this way, the flow of the fluid which is a measurement target is faired. Therefore, measurement can be carried out under a state in which the fluid which is a measurement target is flowing stably. As a result, measurement accuracy can be improved.

Although in the present embodiment, the fluid which is a measurement target is the gas, the present invention is not limited to this, but the ultrasonic flow meter device 10 of the present embodiment can be suitably used to measure another known fluids. Although in the present embodiment, the ultrasonic flow meter device 10 includes the fluid passage body 1 defined by the partition wall 1d such that the fluid passage body 1 is separated from the circuit chamber 9, the present invention is not limited to this. Any known configuration may be used so long as the measuring unit 11 includes at least a flanged member such as the wall 6, and the opening 1c and the flanged member (wall 6 and the like) can be joined together in a sealed state by a simple method, in a state where the measuring unit 11 is mounted to the opening 1c provided on the side wall of a pipe through which the fluid which is a measurement target flows.

### (Embodiment 2)

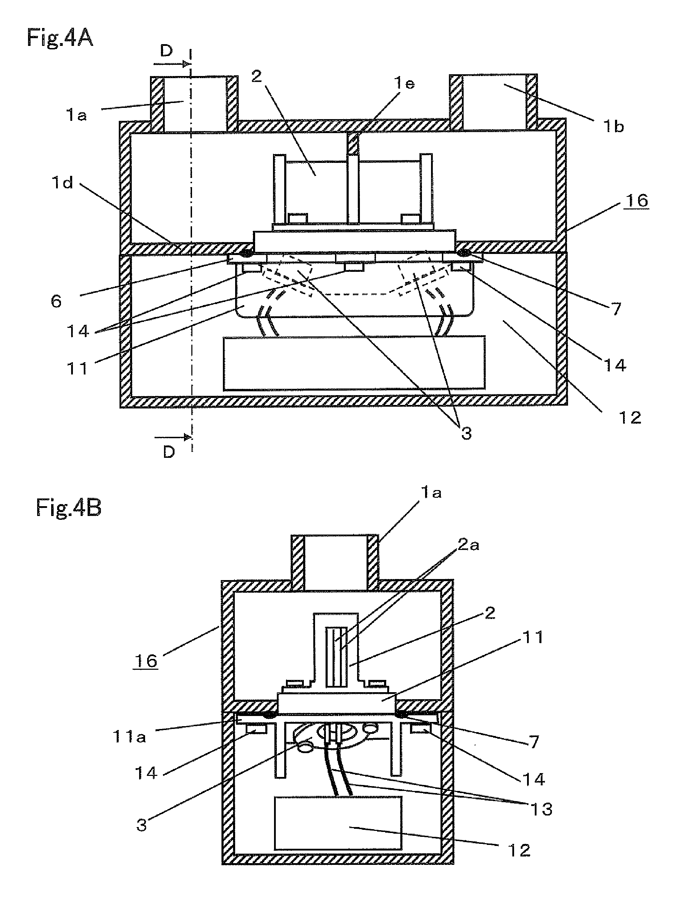

Embodiment 2 of the present invention will be described with reference to Figs. 4A and 4B. Figs. 4A and 4B show an ultrasonic flow meter device 16 (flow measuring device) according to the present embodiment. In Embodiment 2, the same components as those of Embodiment 1 or the corresponding components are designated by the same reference symbols and repetitive description will be omitted. In Figs. 4A and 4B, no reference symbols are assigned to some of the components for the sake of easier explanation.

As shown in Figs. 4A and 4B, the ultrasonic flow meter device 16 is basically identical to the ultrasonic flow meter device 10 of Embodiment 1 except that the dividing members 2a dividing the measurement fluid passage 2 into fluid passages are placed in parallel with the direction in which the fluid which is a measurement target flows into the ultrasonic flow meter device 16 through the inlet 1a.

In accordance with this configuration, since the fluid which is a measurement target flowing into the ultrasonic flow meter device 16 through the inlet 1a is introduced into the fluid passages defined by the dividing members 2a substantially evenly, the fluid which is a measurement target flows in the fluid passages at a uniform velocity. This can improve measurement accuracy.

Numeral modifications and alternative embodiments of the present invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention.

### Industrial Applicability

As should be appreciated from the foregoing, the ultrasonic flow meter device of the present invention is capable of easily preventing a fluid which is a measurement target from leaking from a measuring section to outside a casing with a simple configuration, and of carrying out maintenance more easily. Therefore, the ultrasonic flow meter device of the present invention is widely used in ultrasonic flow measuring devices such as ultrasonic flow meter devices which perform measurement of various fluids.

## Claims

1. An ultrasonic flow meter device comprising:
a fluid passage having an inlet and an outlet of a fluid which is a measurement target;
a fluid passage body having an opening formed between the inlet and the outlet of the fluid passage;
a measurement fluid passage inserted into the fluid passage through the opening and communicating the inlet and the outlet with each other;
a wall placed on a side surface of the measurement fluid passage and covering the opening; and
a measuring unit including a pair of ultrasonic sensors attached to the wall and configured to transmit an ultrasonic signal; and
a fluid flow calculating means for measuring a propagation time of the ultrasonic signal propagating between the ultrasonic sensors and calculating a fluid flow;
wherein the wall and an outer peripheral portion of the opening are joined together in a sealed state.

2. The ultrasonic flow meter device according to Claim 1,
wherein the measurement fluid passage has a rectangular fluid passage cross-section.

3. The ultrasonic flow meter device according to Claim 2,
wherein the pair of ultrasonic sensors are placed on the same surface of the wall such that the ultrasonic signal transmitted from one of the ultrasonic sensors is reflected at least once by an inner wall of the fluid passage which is opposite to the ultrasonic sensor and received by the other of the ultrasonic sensors.

4. The ultrasonic flow meter device according to Claim 3,
wherein the fluid passage has a U-shaped, and a buffer section having a greater cross-sectional area than the measurement fluid passage is provided between the inlet and the measurement fluid passage.

5. The ultrasonic flow meter device according to Claim 4,
wherein the measurement fluid passage is divided into a plurality of passages extending in a fluid flow direction by a plate-shaped dividing member placed in parallel with a radiation direction of the ultrasonic signal transmitted from the ultrasonic sensor.

6. The ultrasonic flow meter device according to Claim 5,
wherein the dividing member is placed in parallel with a direction in which the fluid which is a measurement target flows into the ultrasonic flow meter device through the inlet of the fluid passage.

7. The ultrasonic flow meter device according to any one of Claims 1 to 5,
wherein the measurement fluid passage has a smaller cross-section than the fluid passage, and a separating section is provided in a space between the measurement fluid passage and the fluid passage.
